## Europäisches Patentamt
## European Patent Office
## Office européen des brevets

(19)

(11) Publication number: **0 076 796**
**B1**

(12) **EUROPEAN PATENT SPECIFICATION**

(45) Date of publication of patent specification: **02.10.85**

(21) Application number: **81903050.3**

(22) Date of filing: **02.11.81**

(86) International application number:
**PCT/US81/01473**

(87) International publication number:
**WO 82/02821 02.09.82 Gazette 82/21**

(51) Int. Cl.⁴: **B 60 R 7/00,** A 47 B 95/00,
A 47 B 49/00, B 65 D 43/24,
F 16 B 39/00

(54) **OVERHEAD STOWAGE BIN MECHANISM.**

(30) Priority: **17.02.81 US 235215**

(43) Date of publication of application:
**20.04.83 Bulletin 83/16**

(45) Publication of the grant of the patent:
**02.10.85 Bulletin 85/40**

(84) Designated Contracting States:
**DE FR GB NL SE**

(56) References cited:
EP-A-0 049 716
DE-A-2 162 609
DE-C- 821 444
GB-A- 124 139
US-A- 806 277
US-A- 876 159
US-A- 893 081
US-A- 919 170
US-A-1 145 264
US-A-2 037 156
US-A-2 590 341
US-A-2 885 230
US-A-2 929 474

(73) Proprietor: **THE BOEING COMPANY**
**P.O. Box 3707 Mail Stop 7E-25**
**Seattle, WA 98124 (US)**

(72) Inventor: **PALOMBO, Mark Allen**
**14025 61st Place West Apartment A**
**Edmonds, WA 98020 (US)**
Inventor: **WALKDEN, Arthur**
**1921 Aberdeen Place Southeast**
**Renton, WA 98055 (US)**

(74) Representative: **Hoijtink, Reinoud**
**OCTROOIBUREAU ARNOLD & SIEDSMA**
**Sweelinckpleinl**
**NL-2517 GK Den Haag (NL)**

(56) References cited:
**US-A-3 406 999**
**US-A-3 512 328**
**US-A-3 790 240**
**US-A-4 076 351**
**US-A-4 102 005**
**US-A-4 275 942**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to an overhead stowage bin mechanism of the kind described in EP—A—0.049.716, filed before, but published at a later date than, the priority date of the present application.

The present overhead stowage bin mechanism is particularly adapted for use in passenger airplanes. Each end of the bin is supported by a pair of pivoted arms of unequal length so proportioned that the bin moves from its stowed position downward and slightly forward, at the same time tilting slightly for ease of access. The arms interengage in the down position to increase rigidity. A spring cartridge is connected to each of the upper arms to counterbalance the weight of the bin, and also is arranged to hold the bin in the down position. The upper arms are interconnected by a torque tube, and a snubbing device is also included in the mechanism. However, the most important parts of the mechanism are the self-aligning bearings which are employed between the bin walls and the arms. The mechanism, according to Federal Aviation Administration specifications, must support a 300 pound weight hanging free on the stowage bin without signs of misalignment. Installation or removal of a bin is very cumbersome since a bin is generally mounted in a row of 50 or 60 bins. Furthermore, such removal required the presence of two to three repairmen.

The present invention aims at providing a stowage bin assembly which requires only one repairman for bin installation, dismantling, or repair.

This is achieved with a stowage bin assembly comprising a fixed supporting structure, a relatively movable bin and a mechanism for supporting and guiding said bin from and with respect to said structure, said mechanism comprising:

a) an upper arm pivoted at one of its extremities to said structure and pivoted by a first bearing means to said bin;

b) a lower arm pivoted at one of its extremities to said structure and pivoted by a second bearing means to said bin;

c) an abutment on said lower arm, intermediate is extremities, an abutment-engaging element on said upper arm engageable with said abutment of said lower arm and interfitting therewith, for limiting relative motion of said arms about their pivots and resisting relative motion therebetween parallel to said pivots; and

d) a locking means on said abutment and said abutment-engaging element for temporarily locking said arms together for bin installation and repair purposes. When the arms are temporarily locked together by the locking means, the bin can be dismounted by releasing the bearing means.

According to a further development of the invention, at least one of said first and second bearing means comprises:

a) a self-locking, threaded bolt mounted at said respective arm extremity;

b) a housing, carrying needle bearing elements to form an elongated axle hole, mounted to said bin interior area; and

c) an axle bolt having an internal threaded portion cooperating with said self-locking, threaded bolt and fastened therewith and positioned through said elongated axle hole to form a self-aligning bearing between said respective arm and said bin. The bearing means can easily be released in the locked position of the locking means, by simply unscrewing the relevant axle bolts. Furthermore the elongated axle hole in the bearing housings provide for a self-aligning feature which prevents rocking of the bin, so that the bin is perfectly linearly guided when the bin is moved from stowage to loading position.

An advantageous embodiment of the stowage bin assembly according to the invention is obtained when said mechanism comprises a pair of upper arms and a pair of lower arms, one arm of each pair being provided at one end of the bin and the other arm at the other end, at the exterior side of the bin, each of said axle bolts being mounted through the elongated axle hole of the respective housing from the bin interior side. The axle bolts can be very well accessed from the interior side of the bin, in this way further enhancing the handling of the bin in cases of installation, dismantling, or repair.

A further improvement is obtained when said bearing axle bolt is provided with a retaining groove at its end portion, and in that a spring washer is provided about said bolt located between said housing and said arm and having an outside diameter larger than said axle hole so that upon removal of said axle bolt, said spring washer will contract about said retaining groove and provide for retention of said axle bolt in said housing of said first and second bearing means.

Having thus described the features and advantages of the present invention, other features and advantages of the bin mechanism will become further apparent from the following description presented in conjunction with the accompanying drawings, hereinafter defined in detail.

Figure 1 shows a pair of overhead stowage bins, one in a fully opened loading position.

Figure 2 is a side elevation of the bin mechanism when the bin is in a stowed or closed position.

Figure 3 is a side elevation of the bin mechanism when the bin is in an opened or loading position.

Figure 4 is an exploded view of the bearing arrangement.

Figure 5 is a cross section through the center of a bearing arrangement in an installed position, as along line 5—5 of Figure 1.

Figure 6 is a cross section of the bearing arrangement when the axle bolt is disconnected from the arm and becomes retained to the bearing self-aligning needle housing.

Figure 7 is an elevation taken along line 7—7 of Figure 6.

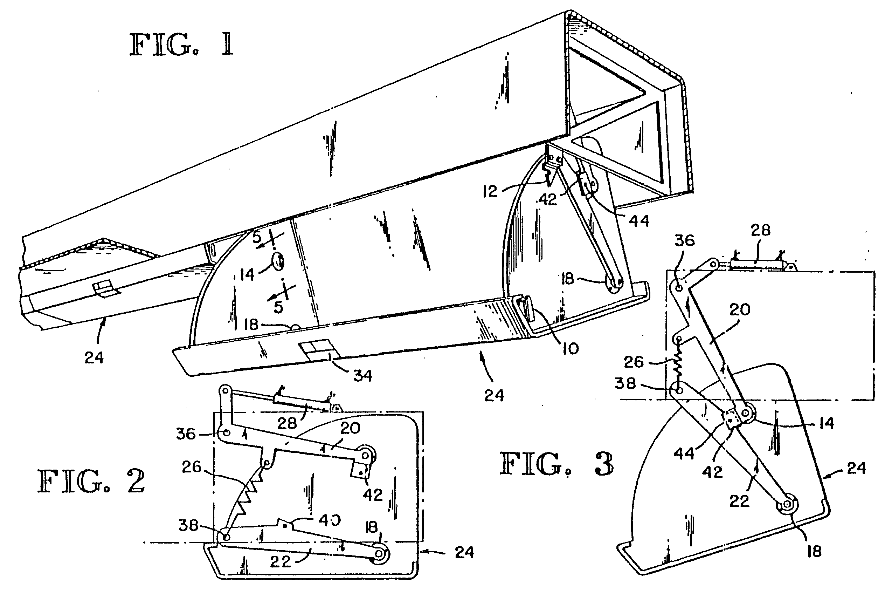

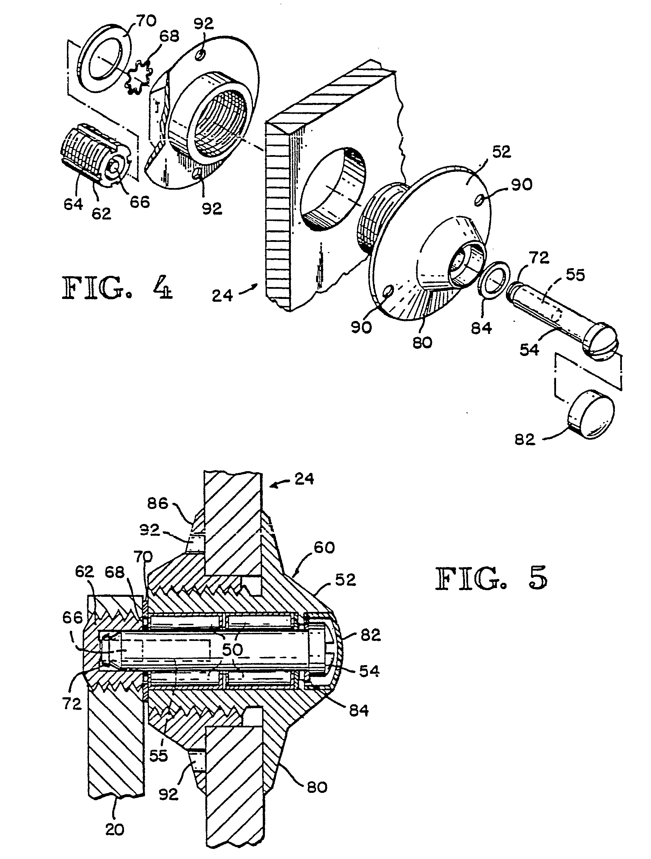

As illustrated in Figure 2, the arms 20 and 22 provide for a stowed position of the bin 24 by the locking of mechanisms 10 and 12, the spring 26 and snubber 28 force holding the arms 20, 22, mounted at the airplane structure pivot points 36 and 38. Upon pulling the handle 34 downwards, the bin 24 becomes unlocked from the locking mechanism 10, 12 as illustrated in Figure 1 and stops in a slanted loading position while the arms 20 and 22 grab each other at the center flange 40 and the fork portion 42, which provides for a sturdy non-rocking position as illustrated in Figures 1 and 3. Upon installation, dismantling, or repair by only one man, in accordance with the present invention, it is essential to retain the arms in a locked position by temporarily connecting the two arms 20 and 22 by the insertion of a locking pin 44 through the holes in fork 42 and flange 40. Accordingly, a locking means is provided between the two arms 20 and 22 at each side of the bin 24. Linear control during bin transition from the stowed position to the loading position is obtained by the uniquely designed self-aligning bearings 14 and 18 which are provided with the needle bearings 50 located inside of a housing 52. Preferably two sets of needle bearings next to each other, as illustrated in Figure 5, are utilized. As illustrated further, the width of the housing, which is almost equal to the length of the axle bolt 54, provides for proper support of the axle bolt 54 and thus forms a sturdy linear alignment feature. The complete bearing mechanism 60 has three main parts. The axle retainer 62, which comprises an external threaded part with locking slots 64 which are deformed when the retainer 62 is threaded into the arm so that the retainer is permanently positioned. Inside of retainer 62 is an externally threaded bolt 66 which has a ratchet-washer locking means (not shown) so that when the axle bolt 54, which has an internal threaded portion 55, is screwed onto the retainer bolt 66, the axle bolt 54 becomes mounted and locked. Loosening by vibration or the like is prevented by the ratchet washer locking means. This self locking feature is part of the conventional retainer 62 which is a shelf vendor item.

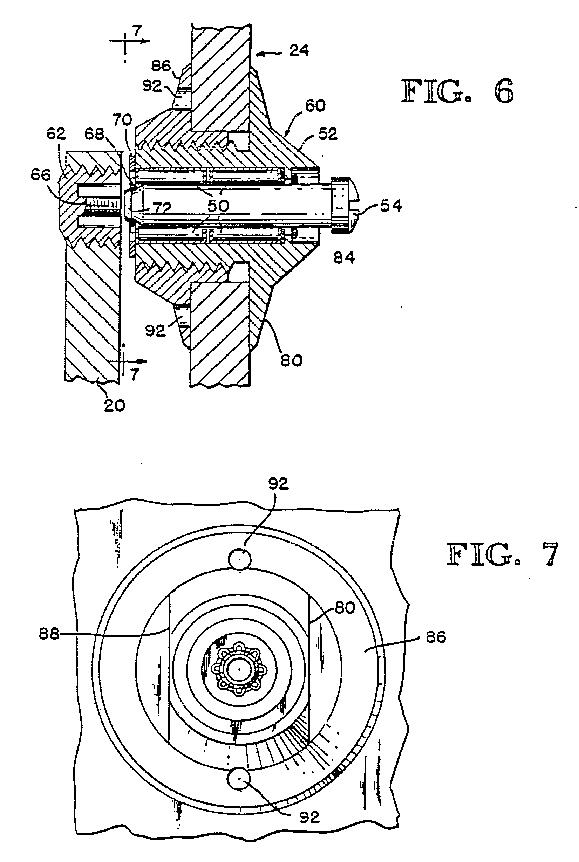

A spring retention washer 68, which fits within the Teflon (registered trade mark) washer 70, becomes an automatic lock or holding means to the axle bolt 54. For instance, when the axle bolt is unfastened from an installed position (see Figures 5 and 6), the washer 68 will slide over the bolt and snap into the groove 72 on the end of the axle bolt 54. Accordingly, the axle bolt 54 will always be retained to the needle bearing housing 52. The unique bearing mechanism and the ability to lock the arms 20 and 22 when the bin 24 is in the loading or folded out position provides one man with the opportunity to install or dismantle a bin 24 when standing at a location near the handle 34. He can replace a damaged bin 24, remove and install the bearing mechanism parts, all within a minimum of time compared to the arrangement of conventional bin installations. In order to maintain an overall smoothness in the bin 24, a cap 82 can be placed over the axle bolt 54 head, thus a smooth housing surface 80 and cap 82 will prevent sharp interference with luggage. Furthermore, a washer 84 is located under the axle bolt 54 head in the preferred embodiment, as illustrated in the exploded version in Figure 4. The third part of the bearing mechanism is the locking nut 86 which is provided with flat flanges 88 and holes 92 for screwing the locking nut 86 by wrench or spanner wrench to the housing 52 as illustrated in Figure 7. In order to hold the housing 52, which has a smooth surface and thus presents a holding problem, a pair of holes 90 similar to holes 92 are provided.

## Claims

1. A stowage bin assembly comprising a fixed supporting structure, a relatively movable bin (24) and a mechanism for supporting and guiding said bin (24) from and with respect to said structure, said mechanism comprising:
a) an upper arm (20) pivoted at one (36) of its extremities to said structure and pivoted by a first bearing means (14) to said bin;
b) a lower arm (22) pivoted at one (38) of its extremities to said structure and pivoted by a second bearing means (18) to said bin;
c) an abutment (40) on said lower arm (22), intermediate its extremities, an abutment-engaging element (42) on said upper arm (20) engageable with said abutment (40) of said lower arm (22) and interfitting therewith, for limiting relative motion of said arms about their pivots and resisting relative motion therebetween parallel to said pivots; and
d) a locking means (44) on said abutment (40) and said abutment-engaging element (42) for temporarily locking said arms together for bin installation and repair purposes.

2. A stowage bin assembly according to Claim 1, characterized in that at least one of said first and second bearing means (14, 18) comprises:
a) a self-locking, threaded bolt (66) mounted at said respective arm (20, 22) extremity;
b) a housing (52), carrying needle bearing elements (50) to form an elongated axle hole, mounted to said bin interior area; and
c) an axle bolt (54) having an internal threaded portion (55) cooperating with said self-locking, threaded bolt (66) and fastened therewith and positioned through said elongated axle hole to form a self-aligning bearing between said respective arm (20, 22) and said bin (24).

3. A stowage bin assembly according to Claim 2, characterized in that said mechanism comprises a pair of upper arms (20) and a pair of lower arms (22), one arm of each pair being provided at one end of the bin (24) and the other arm at the other end, at the exterior side of the bin, each of said axle bolts (54) being mounted through the elongated axle hole of the respective housing (52) from the bin interior side.

4. A stowage bin assembly according to Claim 2 or 3, characterized in that said bearing axle bolt (54) is provided with a retaining groove (72) at its end portion, and in that a spring washer (68) is provided about said bolt (54) located between said housing (52) and said arm (20, 22) and having an outside diameter larger than said axle hole so that upon removal of said axle bolt (54), said spring washer (68) will contract about said retaining groove (72) and provide for retention of said axle bolt (54) in said housing (52) of said first and said second bearing means (14, 18).

**Patentansprüche**

1. Verstaubehältnisanordnung, umfassend einen festen Tragaufbau, ein relativ bewegbares Behältnis (24) und einen Mechanismus zum Halten und Führen des Behältnisses (24) von dem und mit Bezug auf den Aufbau, wobei dieser Mechanismus folgendes umfaßt:

a) einen oberen Arm (20), der an einem (36) seiner Enden drehbar an dem Aufbau gelagert ist und mittels einer ersten Lagereinrichtung (14) drehbar an dem Behältnis gelagert ist;

b) einen unteren Arm (22), der an einem (38) seiner Enden drehbar an dem Aufbau gelagert ist und mittels einer zweiten Lagereinrichtung (18) drehbar an dem Behältnis gelagert ist;

c) ein Auflager (40) auf dem unteren Arm (22) zwischen dessen Enden, ein Auflagereingriffselement (42) auf dem oberen Arm (20), das mit dem Auflager (40) des unteren Arms (22) in Eingriff bringbar ist und mit demselben gegenseitig paßt, und zwar zur Begrenzung der Relativbewegung der Arme um ihre Drehachsen und zum Widerstehen einer Relativbewegung zwischen denselben parallel zu den Drehachsen; und

d) eine Verriegelungseinrichtung (44) auf dem Auflager (40) und dem Auflagereingriffselement (42) zum zeitweisen Verriegeln der Arme miteinander für Behältnisinstallations- und -reparaturzwecke.

2. Verstaubehältnisanordnung nach Anspruch 1, dadurch gekennzeichnet, daß wenigstens eine von der ersten und zweiten Lagereinrichtung (14, 18) folgendes umfaßt:

a) einen selbstverriegelnden Gewindebolzen (66), der an dem Ende des jeweiligen Arms (20, 22) angebracht ist;

b) ein Gehäuse (52), das Nadellagerelemente (50) zum Ausbilden eines langgestreckten Achslochs trägt, welches an dem Behältnisinnenbereich angebracht ist; und

c) einen Achsenbolzen (54), der einen Innengewindeteil (55) hat, welcher mit dem selbstverriegelnden Gewindebolzen (66) zusammenwirkt und an demselben angeschaubt sowie durch das langgestreckte Achsenlock positioniert ist, so daß ein selbstfluchtendes Lager zwischen dem jeweiligen Arm (20, 22) und dem Behältnis (24) ausgebildet ist.

3. Verstaubehältnisanordnung nach Anspruch 2, dadurch gekennzeichnet, daß der Mechanismus ein Paar von oberen Armen (20) und ein Paar von unteren Armen (22) umfaßt, wobei ein Arm jedes Paars an einem Ende des Behältnisses (24) vorgesehen ist und der andere Arm am anderen Ende, und zwar auf der äußeren Seite des Behältnisses, wobei die Achsenbolzen (54) von der Behältnisinnenseite durch das langgestreckte Achsenloch des jeweiligen Gehäuses (52) angebracht ist.

4. Verstaubehältnisanordnung nach Anspruch 2 oder 3, dadurch gekennzeichnet, daß der Lagerachsenbolzen (54) seinem Endteil mit einer Haltenut (72) versehen ist, und daß eine Federunterlegscheibe (68) um den Bolzen (54) vorgesehen ist, und zwar zwischen dem Gehäuse (52) und dem Arm (20, 22) angeordnet sowie mit einem Außendurchmesser, der größer als das Achsenloch ist, so daß sich die Federunterlegscheibe (68) beim Entfernen des Achsenbolzens (54) um die Haltenut (72) zusammenzieht und den Achsenbolzen (54) in dem Gehäuse (52) der ersten und zweiten Latereinrichtung (14, 18) zurückhält.

**Revendications**

1. Un ensemble à coffre de rangement comprenant une structure porteuse fixe, un coffre (24) mobile par rapport à la structure et un mécanisme pour supporter et guider ledit coffre (24) à partir de ladite structure et par rapport à celle-ci, ledit mécanisme comprenant:

a) un bras supérieur (20) pivoté à l'une (36) de ses extrémités à ladite structure et pivoté par un premier palier (14) audit coffre,

b) un bras inférieur (22) pivoté à l'une (38) de ses extrémités à ladite structure et pivoté par un second palier (18) audit coffre,

c) une butée (40) sur ledit bras inférieur (22), entre ses extrémités, un élément (42) d'engagement de la butée, prévu sur ledit bras supérieur (20) et destiné à venir en contact avec ladite butée (40) dudit bras inférieur (22) et à s'ajuster avec elle, afin de limiter le mouvement relatif desdits bras autour de leurs pivots et résister à un mouvement relatif entre eux parallèlement auxdits pivots, et

d) un moyen de verrouillage (44) sur ladite butée (40) et ledit élément (42) d'engagement de la butée, destiné à verrouiller temporairement lesdits bras l'un à l'autre aux fins d'installation et de réparation du coffre.

2. Un ensemble à coffre de rangement selon la revendication 1, caractérisé en ce que l'un au moins desdits premier et second paliers (14, 18) comprend:

a) un boulon (66) fileté et auto-bloquant, monté dans ladite extrémité du bras correspondant (20, 22),

b) un boîtier (52) portant des éléments de roulement à aiguilles (50) pour former un trou d'axe allongé, monté dans ladite zone interne du coffre; et

c) un boulon d'axe (54) ayant une partie (55) interne taraudée coopérant avec ledit boulon fileté auto-bloquant (66) et solidarisé à ce dernier et positionné dans ledit trou d'axe allongé afin de former un palier à auto-alignement entre ledit bras correspondant (20, 22) et ledit coffre (24).

3. Un ensemble à coffre de rangement selon la revendication 2, caractérisé en ce que ledit mécanism comprend une paire de bras supérieurs (20) et une paire de bras inférieurs (22), un bras de chaque paire étant prévu à une extrémité du coffre (24) et l'autre bras à l'autre extrémité, sur le côté externe du coffre, chacun desdits boulons d'axe (54) étant monté dans le trou d'axe allongé du boîtier correspondant (52) depuis le côté de l'intérieur du coffre.

4. Un ensemble à coffre de rangement selon la revendication 2 ou 3, caractérisé en ce que ledit boulon d'axe de palier (54) est muni d'une gorge de retenue (72) à sa partie d'extrémité, et en ce qu'une rondelle élastique (68) est montée autour dudit boulon (54) et disposée entre ledit boîtier (52) et ledit bras (20, 22) et ayant un diamètre externe plus grand que ledit trou d'axe de sorte qu'au retrait dudit boulon d'axe (54), ladite rondelle élastique (68) se contracte autour de ladite gorge de retenue (72) et assure la retenue dudit boulon d'axe (54) dans ledit boîtier (52) dudit premier et dudit second palier (14, 18).

FIG. 1

FIG. 2

FIG. 3

0 076 796

FIG. 4

FIG. 5

2

FIG. 6

FIG. 7

0 076 796

3